# EUROPÄISCHE PATENTSCHRIFT

(11) **EP 0 872 452 B1**
(45) Veröffentlichungstag und Bekanntmachung des Hinweises auf die Patenterteilung: **17.03.2004**
(21) Anmeldenummer: 98106677.2
(22) Anmeldetag: 11.04.1998
(51) Int. Cl.: C02F 11/12

(54) **Verfahren zur Reinigung von öl- und wasserhaltigen Walzzunderschlämmen**
Process for the purification of oil and water containing mill scale sludges
Procédé de purification de boues laminoirs contenant de l'huile et de l'eau

(30) Priorität: 16.04.1997 DE 19715839
(43) Veröffentlichungstag der Anmeldung: 21.10.1998
(73) Patentinhaber: Gebr. Lödige Maschinenbau GmbH, D-33050 Paderborn (DE)
(72) Erfinder: Numrich, Reiner, Dr.-Ing., 33178 Borchen (DE)
(74) Vertreter: Gille Hrabal Struck Neidlein Prop Roos

(56) Entgegenhaltungen:
- EP-A- 0 588 152
- WO-A-97/27147
- US-A- 4 742 623
- US-A- 5 490 907

## Beschreibung

Die Erfindung betrifft ein Verfahren zur Reinigung von öl- und wasserhaltigen Walzzunderschlämmen, bei dem die Walzzunderschlämme für einen ersten Trocknungsschritt einem beheizbaren Behandlungsraum zugeführt werden.

Ein Verfahren der eingangs genannten Art sind aus dem Prospekt "Thermocon-Thermische Reinigung von kontaminierten Schüttgütern" der Firma Lobbe Umwelttechnik GmbH & Co, 58642 Iserlohn von 6/1996 bekannt.

In der stahlverarbeitenden Industrie wird Rohstahl als Ausgangsmaterial durch eine formgebende Bearbeitung (Walzen, Schmieden usw.) zu einem Zwischen- oder Endprodukt weiterbearbeitet. Beim Bearbeitungsvorgang entstehen neben dem Zwischen- oder Endprodukt auch Abfälle in Form eisenhaltiger Partikel (Eisenpulver, Eisenspäne, usw.). Auf Grund der Einwirkung oxidierender Gase auf diese Abfallprodukte entsteht sehr schnell ein Eisenoxid, das als Walzzunder bezeichnet wird. Ziel eines angestrebten Recyclingvorgangs ist es, den Walzzunder wieder als Ausgangsprodukt nutzen zu können. Dies wird jedoch dadurch erschwert, dass der Walzzunder in Folge von Verlustschmierungen oder Leckagen der Verarbeitungsanlagen mit Ölen, Fetten und anderen Flüssigkeiten kontaminiert wird. Folglich ist der verschmutzte Walzzunder, die sogenannten Walzzunderschlämme, nicht mehr als Rohstoff zur Rückführung in die Stahlerzeugung geeignet. Die Walzzunderschlämme können nur dann in den Rohstoffkreislauf zur Stahlerzeugung wieder integriert werden, wenn sie von Öl und Wasser gereinigt werden. Das Erfordernis der Reinigung von öl- und wasserhaltigen Walzzunderschlämmen wird offensichtlich, wenn man sich vor Augen führt, dass allein in der Bundesrepublik im Bereich der stahlverarbeitenden Industrie jährlich ca.1 Million Tonnen verunreinigter, hochwertiger Walzzunder anfällt. Aus ökologischen Gründen ist es daher wichtig, Wasser und Öl von dem Walzzunder zu trennen, um das gewonnene Eisenoxid wieder im Hochofen zur Stahlherstellung verwenden zu können.

Durch den genannten Prospekt der Firma Lobbe wird bereits ein Verfahren vorgeschlagen, bei dem die Walzzunderschlämme in einem Schüttgutbehälter erhitzt werden. Der Schüttgutbehälter enthält einen Reaktor, in dem die Walzzunderschlämme von unten erwärmt werden, so dass zunächst das enthaltene Wasser verdampft und nach oben steigt. Dabei sollen auch bereits die organischen Schadstoffe (Öle, Fette) aus den Walzzunderschlämmen ausgetrieben werden. Im oberen Bereich des Schüttgutbehälters können die entstehenden Brüden gesammelt, abgeführt und gereinigt werden. Eine derartige Behandlung von verschmutzten Schlämmen ist vorwiegend für Schlämme geeignet, die einen hohen Anteil an Wasser aufweisen. Wenn aber der Anteil an Öl oder Fett in den verschmutzten Schlämmen zunimmt, fällt der Reinigungseffekt zunehmend geringer aus bzw. die Behandlungsdauer der Schlämme steigt stetig an. Vor allem die angestrebte Behandlung großer Mengen öl- und wasserhaltiger Walzzunderschlämme innerhalb einer möglichst kurzen Behandlungsdauer ist nicht möglich.

Das bekannte Verfahren arbeitet auf einer rein thermischen Basis. Durch die DE 29 18 820 C2 wird daher zusätzlich vorgeschlagen, bei der Reinigung von schütt- und/oder fließfähigen Stoffen diesen Stoffen chemische Reaktanten beizumischen, damit die Reaktanten auf die Schüttgüter einwirken können. Eine derartige .Verwendung von zusätzlichen Reaktionsmitteln erfordert weitere Verfahrensschritte und bringt wiederum andere Recyclingprobleme mit sich, wie z. B. die Entsorgung der Reaktionsprodukte. Es werden zur Wiedergewinnung der Reaktanten nachgeschaltete Filter, Wäscher oder Kondensatoren benötigt.

Obwohl es wünschenswert ist, die öl- und wasserhaltigen Walzzunderschlämme allein auf thermischem Wege reinigen zu können, benutzen die bekannten und in der Industrie eingesetzten, großtechnischen und wirtschaftlich arbeitenden Verfahren Hilfsstoffe (hydrophobiertes Kalzium, Wasserdampf als Strippmittel, usw.) zur Abtrennung des Öls. Die dabei auftretenden Abfallprodukte müssen ebenfalls entsorgt werden und sind nur schwer recyclebar.

Durch die US 3,514,349 und die US 5,060,663 sind beheizbare Vorrichtungen mit einer Vakuumtrockung bekannt geworden.

Der vorliegenden Erfindung liegt daher die Aufgabe zugrunde, die Reinigung von öl- und wasserhaltigen Walzzunderschlämmen ohne weitere Hilfsstoffe unter Einsatz von rein thermischer Energie weiter zu verbessern, effektiver zu gestalten und für den großtechnischen Einsatz nutzbar zu machen.

Diese Aufgabe wird durch ein Verfahren gelöst, das zusätzlich zu dem ersten Trocknungsschritt einen zweiten Trocknungsschritt durchzuführen vorschlägt, bei dem die Walzzunderschlämme einer Vakuumtrocknung ausgesetzt werden.

In einem ersten Trocknungsschritt wird die Verdunstung von Wasser unter atmosphärischem Druck durch Wärmezufuhr bewirkt. Aus diesem Grund muss der Behandlungsraum für den ersten Trocknungsschritt lediglich auf eine Temperatur aufgeheizt werden, bei der das in den Walzzunderschlämmen enthaltene Wasser verdunstet. Der heiße Wasserdampf wird dann aus dem Behandlungsraum abgeführt, gereinigt und für andere Zwecke nutzbar gemacht.

Anschließend werden die H₂O-freien Walzzunderschlämme durch Vakuumtrocknung weiterbehandelt. Diese schonende Trocknung ist vorteilhaft, weil dabei unerwünschte oxidative Veränderungen des Eisenoxids vermieden werden. Für die Beheizung wird bei der Vakuumtrocknung die Wärme durch Kontakt oder Wärmestrahlung übertragen. Vorzugsweise wird die Vakuumtrocknung der Walzzunderschlämme bei einem Druck von 5 bis 10 mbar durchgeführt.

Durch das Zusammenspiel einer konventionellen Trocknung und einer Vakuumtrocknung lässt sich somit die Effektivität der Reinigung von öl- und wasserhaltigen Walzzunderschlämmen steigern. In einem ersten Schritt wird das Wasser aus den Walzzunderschlämmen entfernt, so dass die Temperaturbereiche in dem ersten Trocknungsschritt auf die Reinigung der Walzzunderschlämme von Wasser eingestellt werden können, während in dem zweiten Schritt gezielt Öle und Fette aus den Walzzunderschlämmen entfernt werden.

Bei einer bevorzugten Ausführungsform wird der erste Trocknungsschritt in einem Drehrohrofen durchgeführt. Derartige vielseitig verwendbaren Drehrohröfen werden bei der Eisen- und Stahlerzeugung bereits eingesetzt und sind daher bereits in den Unternehmen der Stahlindustrie vorhanden. Der Drehrohrofen besteht im wesentlichen aus einem beheizbaren, feuerfesten Rohr aus Stahlblech. Das Rohr ist um einige Grade gegen die Horizontale geneigt, so dass das in dem Rohr befindliche Gut bei der langsamen Drehung des Drehrohrofens vom oberen Ende des Drehrohrofens nach unten wandert. Die Erhitzung der Walzzunderschlämme erfolgt durch direkten Kontakt mit dem beheizten Rohr und/oder mit einem erwärmten Gas, das im Gleich- oder Gegenstrom durch den Drehrohrofen strömt. Durch die Neigung- und Drehzahländerung kann verhindert werden, dass die Walzzunderschlämme an dem feuerfesten Rohr festbacken.

Eine gute Wärmeübertragung innerhalb des Behandlungsraums auf die Walzzunderschlämme kann erreicht werden, wenn den Walzzunderschlämmen im Behandlungsraum ein Heizgas zugeführt wird. Das zugeführte Heizgas mit einer Temperatur von vorzugsweise 250°C kann im direkten Kontakt die Walzzunderschlämme durchströmen, leicht aufrütteln und das Wasser austreiben. Das Heizgas kann möglichst große Oberflächenbereiche auch im Innern der Walzzunderschlämme erreichen und somit den Trocknungsschritt beschleunigen.

Die wirtschaftliche Nutzung des erfindungsgemäßen Verfahrens lässt sich noch weiter dadurch steigern, dass der erste Trocknungsschritt in dem Behandlungsraum kontinuierlich durchgeführt wird, während der zweite Trocknungsschritt mit Hilfe mindestens zweier Vakuumtrocknungsvorrichtungen diskontinuierlich durchgeführt wird. Der Behandlungsraum für den ersten Trocknungsschritt wird stets beheizt und ist im Dauerbetrieb mit Walzzunderschlämmen beschickt. Ohne Maschinenstillstand wird ohne Unterbrechung Wasser aus den Walzzunderschlämmen ausgetrieben. Zwei oder mehrere Vakuumtrocknungsvorrichtungen stehen für den zweiten Trocknungsschritt bereit. Nach Abschluss des zweiten Trocknungsschritts in einer der beiden Vakuumtrocknungsvorrichtungen wird diese Vakuumtrocknungsvorrichtung entleert, während die andere, zweite Vakuumtrocknungsvorrichtung für einen erneuten Trocknungsschritt befüllt werden kann. Dies ermöglicht in einem quasi-kontinuierlichen Betrieb der gesamten Anlage eine rationelle, wirtschaftliche Verarbeitung großer Mengen von Walzzunderschlämmen. Sowohl die Behandlung von noch verschmutzten Walzzunderschlämmen als auch der Abtransport von bereits gereinigten Walzzunderschlämmen kann gleichzeitig in Angriff genommen werden.

Für die gezielte Behandlung zur Reinigung der Walzzunderschlämme von Wasser oder von Öl ist es vorteilhaft, derartige Behandlungen nacheinander durchführen zu können. Aus diesem Grund wird der zweite Trocknungsschritt bei einer höheren Temperatur als der erste Trocknungsschritt durchgeführt. Während es ausreichend ist, den Behandlungsraum auf eine zur Verdampfung von Wasser geeignete Temperatur aufzuheizen, wird für die Reinigung der Walzzunderschlämme von Öl vorzugsweise eine Temperatur von ca. 300°C vorgeschlagen.

Auf die Energiebilanz des erfindungsgemäßen Verfahrens wirkt es sich positiv aus, wenn die Energie der nach dem zweiten Trocknungsschritt entstehenden Abgase und/oder gereinigten Walzzunderschlämme zur Erwärmung des Behandlungsraums für den ersten Trocknungsschritt genutzt wird. Die Behandlung der Walzzunderschlämme innerhalb der Vakuumtrocknungsvorrichtung bei einer höheren Temperatur als in dem Behandlungsraum bringt es mit sich, dass die der Vakuumtrocknungsvorrichtung entnommenen Produkte eine Temperatur aufweisen, die gerade noch zur Beheizung des Behandlungsraums für den ersten Trocknungsschritt ausreichend ist. Diese Energie lässt sich in den Verfahrenskreislauf wieder integrieren. Die Ausnutzung der Wärmeenergie der die Vakuumtrocknung verlassenden Güter kann durch Wärmetauscher oder ähnliche Einrichtungen realisiert werden.

Die erforderliche Heizenergie für die Vakuumtrocknungsvorrichtung auf die notwendigen hohen Temperaturen kann beispielsweise durch eine herkömmliche Ölverbrennungsanlage bereitgestellt werden. Die Wandungen der Vakuumtrockner werde in der Regel von erwärmtem Thermoöl durchströmt und/oder elektrisch beheizt.

Zur Durchführung des Verfahrens wird außerdem eine Vorrichtung vorgeschlagen, die einen direkt beheizbaren Behandlungsraum für einen ersten Trocknungsschritt und eine Einrichtung zur Vakuumtrocknung für einen zweiten Trocknungsschritt aufweist. Der erste Behandlungsraum und auch die Vakuumtrocknungsvorrichtung können kompakt in einer Gerüstkonstruktion mit standardisierten äußeren Abmessungen Platz finden. Hinzutreten werden noch Schalteinrichtungen und konventionelle Bedienelemente, wie gasdichte Abschlüsse, Klappen, Schieber oder dergleichen.

Die Vorrichtung kann mindestens zwei diskontinuierlich arbeitende Vakuumtrockner zur Durchführung des zweiten Trocknungsschrittes aufweisen. Mit Hilfe dieser Vakuumtrockner kann das vorgeschaltete Drehrohr kontinuierlich arbeiten und das aus dem Drehrohr ausströmende H₂O-freie Gut wird einem der beiden Vakuumtrockner zugeführt. Der andere Vakuumtrockner befreit den zu bearbeitenden Walzzunder von Ölen und Fetten und nach abgeschlossener Vakuumtrocknung wird dieser Vakuumtrockner entleert. Der aus der Vakuumstufe strömende Walzzunder ist frei von Verunreinigungen und kann somit ohne Qualitätsverlust weiterverarbeitet werden. Nachdem der zweite Vakuumtrockner entleert ist, wird der Produktstrom aus dem Drehrohr in den zweiten Vakuumtrockner umgeleitet und im ersten Vakuumtrockner kann die Vakuumtrocknung beginnen.

Vorteilhaft ist es, wenn die Vakuumtrockner mit Misch- und/oder Bearbeitungselementen bestückt sind (vorzugsweise Pflugscharelemente), die das zu trocknende Gut im Haufwerk und/oder im mechanisch erzeugten Wirbelbett bewegen.

Dies hat den Vorteil, dass das zu trocknende Gut in kurzen Bearbeitungszeiten von anhaftenden Ölen beziehungsweise Fetten befreit werden kann. Im unter Vakuum stehenden Bearbeitungsraum wird das zu bearbeitende Gut vollständig umgewälzt, beziehungsweise bewegt, so dass keine Produktanhäufungen entstehen können, die nur eingeschränkt der Vakuumtrocknung ausgesetzt sind (Toträume).

Es versteht sich, dass das erfindungsgemäße Verfahren ausschließlich mit mehreren kontinuierlich bzw. quasi-kontinuierlich betriebenen Vakuumtrocknern ausgeführt werden kann, so dass auch beim ersten Trocknungsschritt (Austreibung von H₂O) Vakuumtrockner eingesetzt werden.

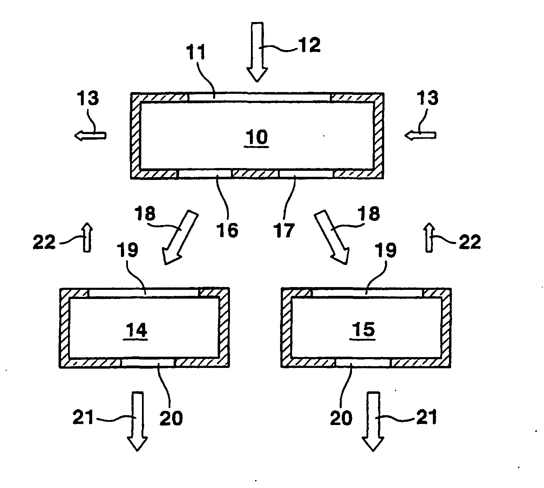

Weitere Vorteile ergeben sich aus der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht abschließend zu verstehen, sondern haben vielmehr beispielhaften Charakter.

Die Erfindung ist in der Zeichnung dargestellt und wird an Hand eines Ausführungsbeispiels näher erläutert.

Die Figur zeigt ein Flussschema des erfindungsgemäßen Verfahrens.

Das Flussschema zeigt das erfindungsgemäße Verfahren stark schematisiert und auf den Kern des Verfahrens reduziert.

Ein Behandlungsraum 10 kann mit öl- und wasserhaltigen Walzzunderschlämmen befüllt werden. Der Behandlungsraum 10 ist über eine verschließbare Öffnung 11 von oben in Pfeilrichtung 12 mit Walzzunderschlämmen beladbar. Zur Umsetzung des Verfahrens kann auf konventionelle und übliche Bauweisen von Reaktions- und Trocknungseinrichtungen zurückgegriffen werden. Daher sollen gasdichte Verschlussvorrichtungen, Rohrleitungen, Heizelemente, Steuervorrichtungen und dergleichen hier nicht näher beschrieben werden. Der Behandlungsraum 10 kann Teil eines Drehrohrofens oder einer anderen beheizbaren Einrichtung (beispielsweise eines Vakuumtrockners) sein. Vorzugsweise wird der Behandlungsraum 10 von Heizgasen 13 durchströmt. Die innerhalb des Behandlungsraums 10 befindlichen Walzzunderschlämme werden durch das Heizgas 13 bei atmosphärischem Druck auf eine Temperatur bis zu 80°C aufgeheizt. Zusätzlich werden die Walzzunderschlämme noch durch den direkten Kontakt mit den Innenwänden des vorzugsweise einsetzbaren Drehrohrofens aufgeheizt. Daher verdunstet das Wasser innerhalb der Walzzunderschlämme und kann als Wasserdampf abgeführt werden. Der abgeführte Wasserdampf wird nachfolgend durch Filtersysteme gereinigt und abgeleitet.

Innerhalb des Behandlungsraums 10 werden Walzzunderschlämme vorzugsweise kontinuierlich aufgeheizt und dadurch von Wasser befreit. Die von Wasser getrockneten Walzzunderschlämme können stets in eine der beiden in der Figur gezeigten Vakuumtrocknungsvorrichtungen 14 und 15 abgeführt werden. Der Behandlungsraum 10 weist an seiner Unterseite Öffnungen 16 und 17 auf, über die die von Wasser getrockneten Walzzunderschlämme in Pfeilrichtung 18 über die Öffnungen 19 in die Vakuumtrocknungsvorrichtungen 14 und 15 gelangen können. Die Öffnungen 16, 17 und 19 sind ebenso wie die Entnahmeöffnungen 20 über geeignete Elemente (Klappen, Schieber, Schleusen) verschließbar und je nach Bedarf steuerbar.

Die Vakuumtrocknungsvorrichtungen 14 und 15 werden vorzugsweise bei einem Druck von 5 bis10 mbar und einer Temperatur von bis zu 300°C betrieben.

Derartige Bedingungen ermöglichen es, die Walzzunderschlämme von Öl zu befreien. Die organischen Schadstoffe werden ausgetrieben, abgeführt und gereinigt. Selbst schwerflüchtige aromatische Kohlenwasserstoffe können dabei den Walzzunderschlämmen entzogen werden. Anschließend können die Walzzunderschlämme in Pfeilrichtung 21 aus dem Verfahrensprozess genommen werden und zur Stahlerzeugung erneut genutzt werden. Die innerhalb der Vakuumtrocknungsvorrichtungen 14 und15 entstehenden heißen Gase 22 können vorteilhaft dazu verwendet werden, die Heizgase 13 zur Beheizung des Behandlungsraums 10 über Wärmetauscher zu erhitzen. Ebenso kann auch die Energie der getrockneten Walzzunderschlämme in den Verfahrenskreislauf integriert werden, um ihre Energie an die Heizgase 13 über entsprechende Hilfseinrichtungen und Wärmetauscher abzugeben.

Bei einem Verfahren zur Reinigung von öl- und wasserhaltigen Walzzunderschlämmen werden die Walzzunderschlämme für einen ersten Trocknungsschritt einem beheizbaren Behandlungsraum 10 zugeführt werden. Zusätzlich zu dem ersten Trocknungsschritt ist ein zweiter Trocknungsschritt vorgesehen, bei dem die Walzzunderschlämme einer Vakuumtrocknung 14, 15 ausgesetzt werden. Aus diesem Grund wird die Reinigung von öl- und wasserhaltigen Walzzunderschlämmen ohne weitere Hilfsstoffe unter Einsatz von rein thermischer Energie weiter verbessert, effektiver gestaltet und für den großtechnischen Einsatz nutzbar gemacht.

Abschließend lässt sich feststellen, dass das erfindungsgemäße Verfahren eine ideale Ergänzung bestehender Produktionsanlagen in der stahlverarbeitenden Industrie unter dem Gesichtspunkt der Abfallrückgewinnung darstellt.

## Patentansprüche

1. Verfahren zur Reinigung von öl- und wasserhaltigen Walzzunderschlämmen, bei dem die Walzzunderschlämme für einen ersten Trocknungsschritt einem beheizbaren Behandlungsraum (10) zugeführt werden, **dadurch gekennzeichnet, dass** zusätzlich zu dem ersten Trocknungsschritt ein zweiter Trocknungsschritt vorgesehen ist, bei dem die Walzzunderschlämme einer Vakuumtrocknung ausgesetzt werden.

2. Verfahren nach Anspruch 1, **dadurch gekennzeichnet, dass** der erste Trocknungsschritt in einem Drehrohrofen durchgeführt wird.

3. Verfahren nach Anspruch 1 oder 2, **dadurch gekennzeichnet, dass** den Walzzunderschlämmen im Behandlungsraum (10) ein Heizgas (13) zugeführt wird.

4. Verfahren nach einem der vorhergehenden Ansprüche, **dadurch gekennzeichnet, dass** der erste Trocknungsschritt in dem Behandlungsraum (10) kontinuierlich durchgeführt wird, während der zweite Trocknungsschritt mit Hilfe mindestens zweier Vakuumtrocknungsvorrichtungen (14, 15) diskontinuierlich durchgeführt wird.

5. Verfahren nach einem der vorhergehenden Ansprüche, **dadurch gekennzeichnet, dass** der zweite Trocknungsschritt bei einer höheren Temperatur als der erste Trocknungsschritt durchgeführt wird.

6. Verfahren nach einem der vorhergehenden Ansprüche, **dadurch gekennzeichnet, dass** die Energie der nach dem zweiten Trocknungsschritt entstehenden Abgase (22) zur Erwärmung des Behandlungsraums (10) genutzt wird.

## Claims

1. Process for the purification of oil- and water-containing mill scale sludge, in which the mill scale sludge is fed to a heatable treatment chamber (10) for a first drying stage, **characterised in that**, in addition to the first drying stage, a second drying stage is provided, in which the mill scale sludge is subjected to vacuum drying.

2. Process according to claim 1, **characterised in that** the first drying stage is carried out in a rotary tubular kiln.

3. Process according to claim 1 or 2, **characterised in that** a heating gas (13) is fed to the mill scale sludge in the treatment chamber (10).

4. Process according to any of the preceding claims, **characterised in that** the first drying stage is carried out continuously in the treatment chamber (10), while the second drying stage is carried out discontinuously using at least two vacuum dryers (14, 15).

5. Process according to any of the preceding claims, **characterised in that** the second drying stage is carried out at a higher temperature than the first drying stage.

6. Process according to any of the preceding claims, **characterised in that** the energy of the exhaust gases (22) produced after the second drying stage is used to heat the treatment chamber (10).

## Revendications

1. Procédé de purification de boues de battitures de laminage contenant de l'huile et de l'eau, avec lequel les boues de battitures de laminage sont amenées à un espace de traitement (10) pouvant être chauffé pour une première étape de séchage, **caractérisé en ce que**, en supplément de la première étape de séchage, il est prévu une seconde étape de séchage lors de laquelle les boues de battitures de laminage sont exposées à un séchage sous vide.

2. Procédé selon la revendication 1, **caractérisé en ce que** la première étape de séchage est effectuée dans un four tubulaire tournant.

3. Procédé selon la revendication 1 ou 2, **caractérisé en ce qu'**un gaz de chauffage (13) est amené aux boues de battitures de laminage dans l'espace de traitement (10).

4. Procédé selon l'une quelconque des revendications précédentes, **caractérisé en ce que** la première étape de séchage est effectuée de façon continue dans l'espace de traitement (10), alors que la seconde étape de séchage est effectuée de façon discontinue avec au moins deux dispositifs de séchage sous vide (14, 15).

5. Procédé selon l'une quelconque des revendications précédentes, **caractérisé en ce que** la seconde étape de séchage est effectuée à une température supérieure à la première étape de séchage.

6. Procédé selon l'une quelconque des revendications précédentes, **caractérisé en ce que** l'énergie des gaz brûlés (22) se formant après la seconde étape de séchage est utilisée pour le réchauffement de l'espace de traitement (10).
